# EUROPEAN PATENT APPLICATION

(11) **EP 4 050 321 A1**
(43) Date of publication of application: **31.08.2022**
(21) Application number: 21218219.0
(22) Date of filing: 29.12.2021
(51) Int. Cl.: G01N 3/56, G01N 3/06, B24B 23/00, B24B 49/10, B24B 49/12, B24B 49/16

(54) **A DEVICE FOR TESTING ABRASIVE DISCS**

(30) Priority: 25.02.2021 IT 202100004445
(71) Applicant: RI-Flex Abrasives S.R.L., 41057 Spilamberto, (Modena) (IT)
(72) Inventor: TUNIOLI, Roberto, 40125 BOLOGNA (IT); PIAZZI, Guglielmo, 40068 SAN LAZZERO DI SAVENA (BOLOGNA) (IT)
(74) Representative: Casadei, Giovanni

(57) **Abstract**

A device for testing an abrasive disc, comprising: a first sensor (2), applicable to an electric tool (T) for activation in rotation about an axis of rotation (Z) of an abrasive disc (D), which is set up to detect the orientation of the disc (D) in space; a second sensor (3), set up to detect a force with which the disc (D) is pressed in contact with a work surface; a processing module (C), provided with an algorithm set up to detect the transmitted data of the first and second sensor (2,3), so as to compare said data with prefixed threshold intervals and to process a signal which indicates to an operator whether the data transmitted from the first and second sensor (2,3) are within the prefixed threshold intervals.

## Description

The present invention relates to a device for testing abrasive discs.

In particular, the invention relates to a device for testing abrasive discs such as lamellar discs, comprising a disc-shaped support to which a plurality of lamellae made of abrasive material, fibre discs, semi-rigid discs or grinding discs are fixed. The discs can be applied, for example, to a manually activatable rotary tool.

The abrasive discs of the type described above are typically made by setting up a rigid disc-shaped support, made of, for example, plastic material. A layer of glue material is applied on one face of the disc-shaped support on which a plurality of slats, i.e., rectangular portions of small size, made of abrasive material are set up.

Depending on the abrasive material chosen, the structure of the disc and the machining methods to be performed, the abrasive discs have considerably variable features. In particular, an abrasive disc can have a more or less high durability, can perform a more or less effective abrasive action, can lead to a greater or lesser energy consumption of the tool on which it is mounted.

It is therefore required, or in any case appropriate, that the abrasive discs are tested to verify the actual qualities and features with which they are provided at the end of the production process.

To date, the tests are performed essentially in two modes.

A first test mode is entirely manual. Basically, the discs to be tested are mounted on the target tool. A specialised operator is commissioned to carry out a standard machining, typically the polishing of a specimen in the form of a metal bar or plate. At the end of the machining, the weight of the material removed from the specimen and the final weight of the disc are measured, to determine how much abrasive material has detached from the disc and how much material has been removed from the specimen, and the overall integrity of the disc is verified. As can be easily understood, the results of a test performed manually depend on the operator who carries out the test, who is not always able to exert the same pressure or keep the tool in a constant orientation with respect to the surface to be machined. This means that the tests cannot be repeated under the same conditions, and therefore the results obtained are not significant. In other words, the test results are too dependent on how the operator operates, so they are not easily repeatable and are insignificant because they are not objective.

A second test mode involves the use of automatic machines which are capable of activating the abrasive discs in constant conditions, i.e., maintaining a constant pressure and maintaining the orientation of the disc with respect to the surface to be machined. Such machines are quite expensive and cumbersome, and are therefore not always available where a test is required.

The object of the present invention is to provide a device for testing abrasive discs which allows to overcome the drawbacks of the currently available devices and methods.

The main advantage of the invention is to be able to offer a testing system which provides an objective, repeatable result which is not dependent on the operator who performed the test.

Another advantage of the device according to the present invention is that of being substantially more economic and less cumbersome with respect to the currently available automatic machines.

Another advantage of the device according to the present invention is that it is compact and easily transportable.

Another advantage of the device according to the present invention is that it allows to perform tests quickly and effectively, keeping the test parameters and execution conditions constant.

Additional features and advantages of the present invention will become more apparent from the following detailed description of an embodiment of the invention, illustrated by way of non-limiting example in the appended figures, in which:

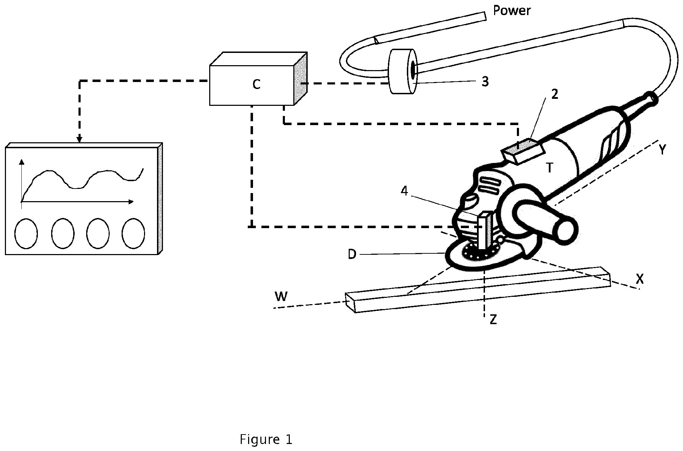

- Fig 1 shows a schematic view of the device according to the present invention;

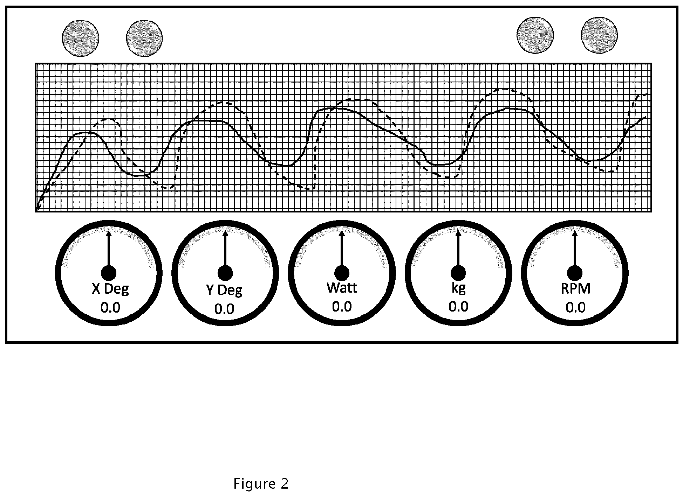

- Fig. 2 shows an example of displaying data generated by the device according to the present invention, presented in a screen that can be displayed on a monitor.

A great advantage of the device according to the present invention is that it allows to perform the test of an abrasive disc in actual working conditions, i.e., carrying out a machining completely similar to the machining normally carried out with the abrasive disc.

In fact, the device according to the present invention allows a test to be carried out in which the abrasive disc (D) is mounted on an electric tool (T), for example a common manual grinder, which activates the disc (D) in rotation about an axis of rotation (Z). The tool (T) can be manually driven by an operator.

The device according to the present invention comprises a first sensor (2), set up to detect the orientation of the disc (D) in space. The first sensor (2) can be associated with the tool (T), i.e., it can be fixed to the tool (T).

In a possible embodiment, the first sensor (2) is set up to detect the angular position of the disc (D) with respect to a first axis (X) and a second axis (Y) perpendicular therebetween and perpendicular to the axis of rotation (Z) of the disc (D). In the depicted embodiment, the second axis (Y) is a longitudinal axis, i.e., it is oriented parallel to the main extension direction of the tool (T). The first axis (X) is a transverse axis.

In a possible embodiment, the first sensor (2) is in the form of an integrated module comprising two or more sensors, each dedicated to detecting the angular position of the disc (D) with respect to one among the first and second axis (X,Y). For example, the first sensor (2) comprises an electronic gyroscope.

The first sensor (2) is connected to a processing module (C), provided with an algorithm set up to detect the data transmitted from the first sensor (2), to compare such data with a prefixed threshold interval and to process a return signal which indicates to an operator if the data transmitted from the first sensor (2) are within the prefixed threshold interval. Preferably, the connection between the first sensor (2) and the processing module (C) is a wireless connection, for example WiFi.

The processing module (C) operates in real time, i.e., it detects the data of the first sensor (2), performs the comparison with the prefixed threshold interval and processes the return signal during the use of the disc (D) by means of the tool (T).

The prefixed threshold interval can be set manually, depending on the type of test to be performed. The threshold interval, for example, expresses a maximum and minimum angular deviation with respect to an angular position in which the disc (D) must be maintained with respect to the surface to be machined. In a preferred embodiment of the device, in which the first sensor (2) is set up to detect the angular position of the disc (D) with respect to the first axis (X) and the second axis (Y), the processing module (C) is provided with two prefixed threshold intervals, one relative to the angular position with respect to the first axis (X) and one relative to the angular position with respect to the second axis (Y). The return signal processed by the processing module (C) is, for example, in the form of a display screen. The screen can show the angular positions of the disc (D) with respect to the axes (X,Y) in real time, also indicating if the angular positions fall within the prefixed threshold intervals or if they are outside one or the other end of the threshold intervals. Thereby, the operator, by driving the tool (T) and observing the screen produced by the processing module (C), is able to keep the disc (D) with a substantially constant orientation with respect to the surface to be machined, changing the angular position of the disc (D) with respect to the first and second axis (X,Y). For example, the processed data provides the operator with a visual indication on the display, preferably in colour, depending on whether it is inside, at the limit or outside the prefixed threshold intervals.

The device further comprises a second sensor (3), set up to detect a force with which the disc (D) is pressed in contact with a work surface. The second sensor (3) is also connected to the control module (C), which is set up to detect the data transmitted from the second sensor (3), to compare said data with a prefixed threshold interval and to process a return signal which indicates to an operator whether the data transmitted from the second sensor (3) are within the prefixed threshold interval.

In a possible embodiment, the second sensor (3) is set up to detect the electrical power absorbed by the tool (T). In such a case, the processing module (C) is provided with an operating curve which relates the power absorbed by the tool (T) with the force with which the tool (D) is pressed on the work surface. Based on the absorbed power detected by the second sensor (3), the processing module (C) determines a corresponding force value with which the tool (D) is pressed on the surface to be machined.

Also with respect to the signal of the second sensor (3), the processing module (C) operates in real time, i.e., it detects the data of the second sensor (3), performs the comparison with the prefixed threshold interval and processes the return signal during the use of the disc (D) by means of the tool (T).

The prefixed threshold interval for the force to be applied to the disc (D) can be set manually, depending on the type of test to be performed. The threshold interval, for example, is between a maximum force and a minimum force with which the disc (D) must be pressed on the surface to be machined.

The return signal processed by the processing module (C), in relation to the force applied to the disc (D), is for example in the form of a display screen. The screen can show the force applied to the disc (D) in real time, also indicating if the force applied falls within the prefixed threshold interval, or if the force applied is greater than the maximum force or less than the minimum force delimiting the threshold interval. Thereby the operator, by driving the tool (T) and observing the screen produced by the processing module (C), is able to apply a substantially constant force on the disc (D).

The operating curve which relates the power absorbed by the tool (T) with the force with which the tool (D) is pressed on the work surface can be constructed for each specific tool (T), by performing a test with a disc (D) of prefixed features and arranging the surface to be machined in contact with a force meter, for example by positioning the surface to be machined on a scale connected to the processing module (C). The latter, by detecting the signal of the scale or the force meter and the signal of the second sensor (3) which detects the power absorbed by the tool (T) in real time, constructs the operating curve relating the force signal with the corresponding signal of the current absorbed by the tool (T). By virtue of the operating curve, the processing module (C) is able to display not only the power absorbed in real time, but also the force exerted by the disc (D) on the piece, for example measured in kg.

The processing module (C) can be provided with various operating curves, constructed as described above, each of which refers to a specific tool (T). Knowing the tool (T) which will be used for the test of an abrasive disc, the processing module (C) allows to choose and use the operating curve of the tool (T) itself.

The first sensor (2) can be set up to detect an acceleration with which the disc (D) advances along a work direction (W), for example by means of an accelerometer. In this case, the processing module (C) is set up to also detect the data transmitted from the first sensor (2) relative to the acceleration of the disc (D), to compare said data with a prefixed threshold interval and to process a return signal which indicates to an operator whether the data transmitted from the first sensor (2) relative to the acceleration are within the prefixed threshold interval.

As for the angular position, the processing module (C) also operates in real time for the acceleration imposed on the disc (D) by the operator, i.e., it detects the data of the first sensor (2), performs the comparison with the prefixed threshold interval and processes the return signal during the use of the disc (D) with the tool (T).

The prefixed threshold interval can be set manually, depending on the type of test to be performed. For example, the threshold interval is between a maximum acceleration and a minimum acceleration with which the disc (D) must be pushed forwards along the work direction. A threshold value, corresponding to a maximum acceleration which can be imposed on the tool, could be used instead of a threshold interval.

The return signal processed by the processing module (C), in the form of a display screen, can also show the acceleration of the disc (D) in real time, also indicating whether such an acceleration falls within the prefixed threshold interval, or if it exceeds the maximum acceleration allowed. Thereby the operator, by driving the tool (T) and observing the screen produced by the processing module (C), is able to adjust the acceleration with which he pushes the disc (D) forwards, staying below the maximum allowed acceleration.

The device according to the present invention can also be provided with a third sensor (4), set up to detect the effective rotation velocity of the tool (D), i.e., the rotation velocity of the disc under actual working conditions while removing the material from the piece, and to transmit a corresponding datum to the processing module (C). A signal indicative of the rotation velocity of the disc (D) can be used, like the other signals, to indicate to the operator the compliance of the machining carried out with respect to a prefixed threshold interval for the rotation velocity of the disc (D). In particular, the effective rotation velocity of the tool (T) is indicative of the pressure exerted on the piece through the tool (T). The greater the pressure exerted, the greater the reduction in velocity of the disc (D) with respect to the no-load rotation velocity.

As with the other data already mentioned, the processing module (C) operates in real time also for the rotation velocity of the disc (D), i.e., it detects the data of the third sensor (4), performs the comparison of a prefixed threshold interval and processes the return signal during the use of the disc (D) with the tool (T).

The prefixed threshold interval can be set manually, depending on the type of test to be performed. For example, the threshold interval is between a maximum velocity and a minimum velocity with which the disc (D) rotates.

The return signal processed by the processing module (C), in the form of a display screen, can also show the real-time rotation velocity of the disc (D), also indicating whether such a rotation velocity falls within the prefixed threshold interval, whether it is greater than the maximum velocity or less than the minimum velocity of the prefixed threshold interval. Thereby the operator, driving the tool (T) and observing the screen produced by the processing module (C), is able to adjust the rotation velocity of the disc (D) to a prefixed value for the test, increasing or decreasing the force exerted on the piece through the tool (T).

In a possible embodiment, the third sensor (4) comprises an optical detector, applicable to the tool (T) so as to detect a complete revolution of the disc (D). The disc (D), or the spindle of the tool (T), can be provided with a reference notch, the passage of which is detected by the optical detector. Thereby, the third sensor (4) is able to count the number of revolutions made by the disc (D) which, in relation to the unit of time, indicate the rotation velocity of the disc (D). Alternatively, it is possible to apply to the disc (D) a perforated disc, not shown in detail, set up in the detection radius of an optical sensor, for example a fibre optic photocell. The definition of the different threshold intervals can be performed using the device according to the present invention to record the operating parameters of a machining test performed freely by an operator. Essentially, the sensors (2,3,4) transmit the data related to the parameters described above to the processing module (C), in the manner indicated above. The processing module (C) transmits a return signal indicating the instantaneous values of the operating parameters, to help the operator keep the disc (D) in a substantially constant position and to exert a substantially constant pressure. The processing module (C) also stores the operating parameters used by the operator during the test and processes such parameters in order to define the threshold intervals necessary for carrying out subsequent tests.

The processing module (C) has been described as provided with an algorithm set up to detect the data transmitted from the different sensors (2,3,4), to compare such data with respective prefixed threshold intervals and to process a return signal which indicates to an operator if the data sent by the various sensors are within the respective prefixed threshold intervals.

The processing module (C) could be divided into separate functional modules (memory modules or operating modules), each intended to perform one of the functions described above of detecting, comparing and processing a return signal. Alternatively, or in addition, these functions can be performed by a plurality of electronic devices over which the aforesaid functional modules can be distributed. Separate functional modules can be connected to a respective sensor (2,3,4).

The separate functional modules can also use one or more processors for the execution of instructions set up for carrying out the aforementioned functions of detecting, comparing and processing a return signal. The functional modules can also be distributed over different computers, locally or remotely, based on the architecture of the network in which they reside. The processing module (C) could also be in the form of a single electronic device, appropriately programmed to perform the functionalities described, and/or the different functional modules can correspond to hardware entities and/or routine software which are part of the programmed device. In a possible embodiment, the processing module (C) is a microcontroller-based unit with I/O devices which receive the data detected by the sensors and display the results on the LCD touch display. The processed data can then be transferred externally to memory devices for subsequent offline analysis.

## Claims

1. A device for testing an abrasive disc, **characterised in that** it comprises: a first sensor (2), applicable to an electric tool (T) for activation in rotation about an axis of rotation (Z) of an abrasive disc (D), which is set up to detect an orientation of the disc (D) in space; a second sensor (3), set up to detect a force with which the disc (D) is pressed in contact with a work surface; a processing module (C), provided with an algorithm set up to detect the transmitted data of the first and second sensor (2, 3), so as to compare said data with prefixed threshold intervals and to process a signal which indicates to an operator whether the data transmitted from the first and second sensor (2, 3) are within the prefixed threshold intervals.

2. The device according to claim 1, wherein the first sensor (2) is set up to detect the angular position of the disc (D) with respect to a first axis (X) and to a second axis (Y) perpendicular to one another and perpendicular to the axis of rotation (Z) of the disc (D).

3. The device according to claim 1, wherein the second sensor (3) is set up to detect the electrical current absorbed by the tool (T), and wherein the processing module (C) is provided with a curve which sets the current absorbed by the tool (T) in relation with the force with which the tool (D) is pressed on the work surface.

4. The device according to claim 1, wherein the second sensor (2) is set up to detect an acceleration with which the disc (D) advances along a work direction (W).

5. The device according to claim 1, wherein the first sensor (2) comprises a gyroscope.

6. The device according to claim 1, comprising a third sensor (4) set up to detect the rotation velocity of the tool (D) and to transmit a corresponding datum to the processing module (C).

7. The device according to claim 6, wherein the third sensor (4) comprises an optical detector, applicable to the tool (T) so as to detect a complete revolution of the disc (D).
